# EUROPÄISCHE PATENTSCHRIFT

(11) **EP 3 802 285 B1**
(45) Veröffentlichungstag und Bekanntmachung des Hinweises auf die Patenterteilung: **20.07.2022**
(21) Anmeldenummer: 19727613.2
(22) Anmeldetag: 24.05.2019
(51) Int. Cl.: B62D 15/02, G01C 21/36, G08G 1/14

(54) **VERFAHREN UND FAHRZEUGSYSTEM ZUR OPTIMIERUNG VON PARKVORSCHLÄGEN**
METHOD AND VEHICLE SYSTEM FOR OPTIMISING PARKING SUGGESTIONS
PROCÉDÉ ET SYSTÈME DE VÉHICULE POUR OPTIMISER LES PROPOSITIONS DE STATIONNEMENT

(30) Priorität: 08.06.2018 DE 102018209158
(43) Veröffentlichungstag der Anmeldung: 14.04.2021
(73) Patentinhaber: Robert Bosch GmbH, 70442 Stuttgart (DE)
(72) Erfinder: LOOS, Hartmut, 31141 Hildesheim (DE); SCHICK, Thorben, 37181 Hardegsen (DE); FORTMEIER, Dirk, 31135 Hildesheim (DE)
(86) Internationale Anmeldenummer: PCT/EP2019/063452
(87) Internationale Veröffentlichungsnummer: WO 2019/233788

(56) Entgegenhaltungen:
- WO-A1-2013/053514
- DE-A1-102012 023 110

## Beschreibung

Die Erfindung betrifft ein Verfahren zur Optimierung Parkvorschlägen mindestens eines Fahrassistenzsystems für mindestens ein Fahrzeug sowie eine System zum Durchführen eines solchen Verfahrens.

### Stand der Technik

Aufgrund ihrer vielen positiven Eigenschafften sind Fahrassistenzsysteme fester Bestandteil der meisten Fahrzeuge. Hierbei handelt es sich meist um technische Vorrichtungen um Parklücken zu vermessen und einen Einparkvorgang durchzuführen. Um Fahrassistenzfunktionen technisch zu ermöglichen sind die Fahrzeuge mit einer Vielzahl an Sensoren, optischen Systemen, wie beispielsweise Rundumsichtsystemen oder Rückfahrkameras, und Auswerteeinheiten ausgestattet.

Ebenfalls bekannt sind bereits Systeme und Verfahren, die geographische Daten detektierter Parklücken an einen Server senden und die Informationen dort für andere Fahrzeuge zum Abrufen bereitstellen. Dabei kann ein Fahrer oder ein Fahrassistenzsystem zwar ein Vorhandensein eines potentiellen Parkplatzes für ein Fahrzeug erkennen, nicht jedoch ob der potenzielle Parkplatz auch für das entsprechende Fahrzeuge geeignet ist.

DE 10 2012 023 110 offenbart ein Verfahren zur Optimierung von Parkvorschlägen mindestens eines Fahrassistenzsystems für mindestens ein Fahrzeug, umfassend die folgenden Schritte: Ermitteln mindestens einer Route zu einem Zielort; Ermitteln von potentiellen Parkmöglichkeiten für das mindestens eine Fahrzeug entlang der zuvor ermittelten Route; Nutzung und Berücksichtigung von Analyseergebnissen für eine Auswahl an zukünftigen Parkvorschlägen.

Keine Beachtung finden bisher Faktoren, wie beispielsweise Präferenzen des Fahrers oder auch spezielle Anforderungen aufgrund von Fahrzeugabmessungen oder Hindernissen, die eine Nutzung eines Parkplatzes für bestimmte Fahrzeuge ausschließt. Auch bei mehrmaligem Ablehnen einer Parklücke durch den Fahrer oder ein Parkassistenzsystem wird das Fahrzeug bei künftigen Fahrten erneut zu einem zuvor abgelehnten Parkplatz geleitet. Durch unnötige Fahrrouten zu verschiedenen Parkplätzen, welche teilweise mehrfach angefahren werden können, wird die Parkplatzroute deutlich erschwert.

### Offenbarung der Erfindung

Die der Erfindung zugrunde liegende Aufgabe kann darin gesehen werden, ein Verfahren und ein Fahrzeugsystem zum Bereitstellen von Parkvorschlägen vorzuschlagen, welche Präferenzen eines Fahrers berücksichtigen können.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird ein Verfahren zur Optimierung von Parkvorschlägen mindestens eines Fahrassistenzsystems für mindestens ein Fahrzeug vorgeschlagen, wobei zunächst in einem Schritte mindestens eine Route zu einem Zielort ermittelt wird. In einem weiteren Schritt werden potentiellen Parkmöglichkeiten für das mindestens eine Fahrzeug entlang der zuvor ermittelten Route bestimmt. Anschließend wird eine Annahme eines Parkvorschlages aus einer Auswahl von Parkvorschlägen oder einer Ablehnung eines Parkvorschlages festgestellt. Bei einer festgestellten Ablehnung des Parkvorschlages werden Abbruchinformationen ermittelt. Es erfolgt eine Analyse und Klassifizierung einer Abbruchphase und eines Abbruchgrundes. Anschließend werden favorisierte Parkmöglichkeiten und/oder Ausschlusskriterien für Parkmöglichkeiten ermittelt. Die Analyseergebnissen werden für eine Auswahl an zukünftigen Parkvorschlägen berücksichtigt.

Gemäß einem weiteren Aspekt der Erfindung wird ein Fahrzeugsystem zum Ausführen des erfindungsgemäßen Verfahrens bereitgestellt. Das Fahrzeugsystem weist mindestens ein Fahrzeug mit einer Steuereinheit und mit einem Infotainmentsystem zum Ermöglichen einer Interaktion zwischen einem Fahrer und einem Parkassistenzsystems und mit einer Kommunikationseinheit zum Herstellen einer datenleitenden Kommunikationsverbindung zu mindestens einer externen Servereinheit des Fahrzeugsystems.

Alle Schritte des Verfahrens können sowohl von einer internen Steuereinheit des Fahrzeugs als auch vollständig oder teilweise von einer externen Servereinheit durchgeführt werden. Durch das Verfahren kann beispielsweise eine bevorzugte, schnellste oder eine möglichst verkehrsarme Route zu einem Zielort ermitteln werden. Das Fahrzeug kann sowohl autonom fahrbar sein sowie alternativ oder zusätzlich ein Fahrassistenzsystem und/oder ein Parkassistenzsystem aufweisen. Es können auch verschiedene Routen zu dem Zielort einem Fahrer, dem Fahrzeug oder einem Fahrassistenzsystem zur Auswahl angeboten werden. Für die ausgewählte Route können anschließend potentielle Parkmöglichkeiten in der Umgebung der ausgewählten Route ermittelt werden. Zusätzlich können parallel auch für die alternativen Routen Parkmöglichkeiten vorgeschlagen werden. Die Parkmöglichkeiten können beispielsweise anhand einer Karte auf einem Display dargestellt werden. Alternativ oder zusätzlich kann der Fahrer durch eine Sprachnavigation eines digitalen Assistenten zu der Parkmöglichkeit geleitet werden. Bei einem autonomen Fahrzeug kann die ausgewählte Route und die Parkmöglichkeit von dem autonomen Fahrzeug oder einer externen Servereinheit ausgewählt und der Parkvorgang ohne eingreifen eines möglichen Fahrers oder Passagiers durchgeführt werden.

Das Verfahren identifiziert die Annahme oder Ablehnung eines Parkvorschlags anhand unterschiedlicher Indikatoren. Bei einer Ablehnung des Parkvorschlages werden von dem Fahrzeug unterschiedliche Abbruchinformationen gesammelt. Hierzu werden insbesondere die Sensoren und optischen Systeme des Fahrzeugs genutzt um möglichst viele Daten über den abgelehnten Parkplatz zu erfassen um diese im Anschluss auswerten und für zukünftige Parkvorschläge berücksichtigen zu können. Alternativ oder zusätzlich können im Fall einer Annahme eines Parkvorschlages unterschiedliche Annahmeinformationen gesammelt werden. Auch hierbei können beispielsweise die Sensoren oder optischen Systeme des Fahrzeugs genutzt werden, um möglichst viele Daten über den bevorzugten Parkplatz zu erfassen. Die gesammelten Informationen können für zukünftige Parkvorschläge berücksichtigt werden, um dem Fahrer, dem autonomen Fahrzeug oder einem Parkassistenzsystem Parkvorschläge anhand von bevorzugten Merkmalen bereitzustellen.

Die erfassten Daten der Sensoren und optischen Systeme des Fahrzeugs dienen einer Analyse und Klassifizierung einer Abbruchphase und eines Abbruchgrundes. Dabei wird ermittelt, in welcher Phase der Annäherung an den Parkvorschlag der Fahrer, das autonome Fahrzeug oder das Parkassistenzsystem den Parkversuch abgebrochen hat. Unterschieden werden kann beispielsweise ob der Parkvorschlag überhaupt angefahren wurde, ob das Fahrzeug an der vorgeschlagenen Parkmöglichkeit vorbeigefahren ist oder ob das Fahrzeug eine Einfahrt in die vorgeschlagene Parkmöglichkeit abgebrochen hat. Mögliche Abbruchgründe können dabei beispielsweise eine Nichterreichbarkeit, Verschmutzungen oder Blockade eines Parkplatzes sein sowie ein ungünstiger Einfahrtswinkel, zu kleine Abmessungen der Parkfläche oder zu geringe Deckenhöhe des Parkplatzes, beispielsweise in einem Parkhaus sein.

Nach der Auswertung und Klassifizierung der Abbruchphase und des Abbruchsgrundes können die ermittelten Ausschlussfaktoren in die Ermittlung von zukünftige Parkvorschlägen genutzt werden, um die Präferenzen der Fahrers oder mögliche Anforderungen des Fahrzeugs zu berücksichtigen.

Das erfindungsgemäße Verfahren ermöglicht eine verbesserte Parkplatzempfehlung durch Einbeziehung von ermittelten Informationen weshalb ein empfohlener Parkplatz nicht genutzt wurde.

Die ermittelten Daten können genutzt werden, um für den speziellen Fahrer und/oder sein Fahrzeug zukünftige Empfehlungen individuell zu gestalten und zu verbessern sowie Empfehlungen für Fahrer mit ähnlichen Parkplatzpräferenzen oder Fahrzeugen mit ähnlichen Eigenschaften, wie beispielsweise ähnlichen Abmessungen oder Radständen, zu verbessern.

Nach einem weiteren Ausführungsbeispiel werden die Annahme eines Parkvorschlages anhand von Annahmeindikatoren und die Ablehnung eines Parkvorschlags anhand von Ablehnungsindikatoren identifiziert. Indikatoren für eine Annahme einer Parkplatzempfehlung oder der Akzeptanz einer vorgeschlagenen Lücke als Parkplatz können beispielsweise ein Abstellen des Motors auf der vorgeschlagenen Parkposition oder ein Befahren einer für Einparkvorgänge charakteristischen Trajektorie an der vorgeschlagenen Parkposition. Alternativ kann auch eine aktive Bestätigung bei auf Interaktion mit dem Fahrer ausgelegten Systemen oder eine Durchführung eines automatisierten Einparkvorgangs an der vorgeschlagenen Position als ein Indikator für die Annahme einer Parkplatzempfehlung gewertet werden.

Des Weiteren kann eine Ablehnung eines Parkvorschlages anhand von Ablehnungsindikatoren identifiziert werden. Indikatoren für eine Ablehnung einer vorgeschlagene Parklücke sind beispielsweise ein Passieren des Fahrzeugs vorbei an der vorgeschlagenen Parkmöglichkeit ohne zu Parken. Alternativ kann bei einem auf Interaktion mit dem Fahrer basierendem Auswahlverfahren von einer Ablehnung der vorgeschlagenen Parkmöglichkeit ausgegangen werden, wenn die Lücke aktiv abgelehnt wird. Bei der Verwendung eines automatisierten Parkassistenten kann eine vorgeschlagene Parkmöglichkeit direkt vom Parkassistenten abgelehnt werden. Durch die eindeutige Klassifizierung, wann ein vorgeschlagener Parkplatz als angenommen gilt, ist es möglich klar zu unterscheiden ob die Parkplätze Empfehlung den Wünschen des Fahrers oder Anforderungen des Fahrzeugs entsprochen hat.

Gemäß einem weiteren Ausführungsbeispiel werden für die Analyse und Klassifizierung einer Abbruchphase und eines Abbruchgrundes Daten von Videosensoren, Ultraschallsensoren, Radarsensoren, LIDAR-Sensoren, Odometriesensoren und/oder von Ortungssensoren verwendet. Durch die verschiedenen Sensoren, wie beispielsweise Videosysteme, Ultraschallsensoren, Radarsensoren, LIDAR-Sensoren, Odometriesensoren, GNSS- Sensoren und dergleichen, kann eine Vielzahl an relevanten Daten generiert und ausgewertet werden. Vorzugsweise wird hierbei auf die bereits im Fahrzeug verwendete Technik von Fahrerassistenzsystemen oder Parkassistenten zurückgegriffen. Die verschieden Sensoren können auch mittels Sensorfusion kombiniert werden. Für die Analyse der Abbruchphase und des Abbruchgrundes werden beispielsweise Daten wie Bilder oder Videos der vorgeschlagenen Parklücke, die während des Vorbeifahrens oder während des automatisierten Einparkvorgangs durch Rückfahr- oder Rundumsichtsysteme aufgenommen wurden, genutzt.

Weitere Daten für die Analyse können mit der Fahrzeugsensorik erhoben werden. Zudem kann für die Auswertung eine Trajektorie des Einparkvorgangs und/oder eine durch den Fahrer manuell durchgeführte Ablehnung aus einem Parkassistenzsystem herangezogen werden. Alternativ oder zusätzlich können beispielsweise bei einer aktiven Ablehnung durch den Fahrer Aufzeichnungen aus der Interaktion mit dem Fahrer verwendeten. Die Auswertung der Ablehnungsgrundes sowie der Feststellung, in welcher Phase des Parkvorganges der Fahrer oder das Fahrzeug die vorgeschlagene Parkmöglichkeit ausgeschlossen haben, ermöglicht es künftig analoge Situationen zu vermeiden und Parkplätze mit ähnlichen Eigenschaften, wie die abgelehnte Parkmöglichkeit, bei der Auswahl von Parkvorschlägen eine geringere Gewichtung zuzuordnen.

Nach einer weiteren Ausführungsform wird das Verfahren basierend auf maschinellen Lernverfahren durchgeführt. Zu maschinellen Lernverfahren gehören beispielweise tiefe neuronale Netze. Diese können zur Klassifizierung der Abbruchphase und des Abbruchgrunds genutzt werden. Durch die Verwendung von maschinellen Lernverfahren ist es möglich das Verfahren selbstständig zu erweitern und anzupassen. Beispielsweise kann so ermöglicht werden, dass das Verfahren sich selbstständig aktualisiert und ständig an neue Situationen wie Baustellen auf Parkflächen oder eine Kommunikation mit einer wachsenden Anzahl von Fahrzeugen anpasst.

Nach einer weiteren Ausführungsform wird die Annahme oder die Ablehnung eines Parkvorschlages durch ein Parkassistenzsystem oder einen Fahrer durchgeführt. Somit ist es möglich dass der Fahrer aktiv einen vorgeschlagenen Parkplatz an seinem Zielort auswählt. Auf diese Art kann der Fahrer seine persönlichen Vorlieben, wie beispielsweise Länge von Fußwegen bis zum eigentlichen Ziel sowie Vorlieben oder Abneigungen gegenüber Parkhäusern oder Ähnliches, äußern. Eine aktive Auswahl oder Ablehnung einer vorgeschlagenen Parkmöglichkeit durch einen Parkassistenzsystem kann insbesondere in die Anforderungen des individuellen Fahrzeugs, beispielsweise in Bezug auf dessen Abmessungen in die Auswahl, einfließen.

Gemäß einem weiteren Ausführungsbeispiel wird eine Ablehnung eines Parkvorschlages durch den Fahrer über ein Display, ein Infotainmentsystem und/ oder sprachebasiert über einen digitalen Assistenten durchgeführt. Insbesondere wenn die benötigten Sensoren zum Durchführen eines automatischen Parkvorgangs nicht im Fahrzeug vorhanden sind oder andere, beispielsweise technische Gründe, vorliegen, weshalb das automatische Verfahren fehlschlägt, kann anstatt eines automatisierten Vorgehens auch eine Benutzerinteraktion Teilschritte des Verfahrens ersetzen. Dabei kann die Interaktion auf verschiedene Weisen erfolgen, zum Beispiel menübasiert auf digitaler Anzeigeeinheit oder sprachbasiert über einen digitalen Assistenten. Des Weiteren können, falls vom Fahrer gewünscht, zusätzliche Informationen übermittelt werden, beispielsweise als Markierungen in den aufgenommen Bilddaten.

Nach einer weiteren Ausführungsform wird die Analyse und Klassifizierung einer Abbruchphase und eines Abbruchgrundes auf einer fahrzeugexternen Servereinheit oder einem fahrzeuginternen Steuergerät durchgeführt. Bevorzugterweise werden die ermittelten Sensor- sowie Bilddaten bei der Analyse vor einer Übertragung an eine fahrzeugexterne Servereinheit komprimiert. Bei einer Auswertung der ermittelten Sensor- sowie Bilddaten in einem fahrzeuginternen Steuergerät können die Daten ohne den Zwischenschritt einer Übertragung an eine Servereinheit verarbeitet werden. Die Auslagerung der Analyse an eine fahrzeugexterne Servereinheit ermöglicht hingegen die Bereitstellung einer höheren Rechenleistung.

Gemäß einem weiteren Ausführungsbeispiel wird durch das Verfahren für ähnliche Fahrzeuge und/oder ähnliche Fahrerpräferenzen ähnliche Parkplatzvorschläge erzeugt. Durch ein Ermitteln ähnlicher Präferenzen bei der Annahme oder Ablehnung von Parkplätzen mit ähnlichen Eigenschaften, können durch das Verfahren Parallelen der Präferenzen ermittelt werden. Dabei ermöglicht das Verfahren Parkvorschläge zu erzeugen, die bei anderen Fahrern oder Parkassistenzsystem mit einem ähnlichen Annahme- oder Ablehnungsverhalten ähnlicher Parkvorschläge Zustimmung fanden. Alternativ oder zusätzlich ermöglicht das Verfahren Parkvorschläge, die bei Fahrern oder Parkassistenzsystemen mit ähnlichen Präferenzen abgelehnt wurden oder ähnliche Eigenschaften haben wie bereits abgelehnte Parkvorschläge bei der Auswahl eine geringere Gewichtung beizumessen. Alternativ oder zusätzlich können beispielsweise für ähnliche Fahrzeugtypen ähnliche Parkvorschläge durch das Verfahren erzeugt werden.

Nach einer weiteren Ausführungsform werden die ausgewerteten Sensor- sowie Bilddaten sowie die Klassifizierung und Analyse der Abbruchphase und des Abbruchgrundes zum Ermitteln von Parkplatzvorschlägen für andere Fahrzeuge auf einem Server zum Abrufen bereitgestellt. Dies ermöglich anderen Fahrzeugen, die mit der Servereinheit verbunden sind, zum einen für die Auswahl eines Parkplatzvorschlages, auf die klassifizierten und analysierten Abbruchphasen und Abbruchgründe anderer Fahrzeuge zurückzugreifen. Zudem erhalten die Fahrzeuge Informationen über Eigenschaften und örtlichen Gegebenheiten von möglichen Parkplatzvorschlägen und können diese in ihrer Auswahl einbeziehen. Die Bereitstellung der Analyseergebnisse ermöglicht zudem die Ermittlung von ähnlichen Annahme- oder Ablehnungsverhalten verschiedener Fahrer oder Parkassistenzsystemen ähnlicher Fahrzeuge. Durch den Austausch der Analysedaten können Rückschlüsse auf zukünftige Annahme- oder Ablehnungsverhalten abgeschätzt werden und somit zielführendere Vorschläge für mögliche Parkplätze durch das Verfahren gemacht werden.

Gemäß einem weiteren Ausführungsbeispiel werden abgelehnte Parkplätze für das Fahrzeug und/oder den Fahrer künftig ausgeschlossen oder geringfügiger berücksichtigt. Hierbei kann das Verfahren abgelehnten Parkplätzen eine geringere Gewichtung zuordnen und diese nur in Ausnahmefällen wie beispielsweise keine vorhandenen Alternativen Parkmöglichkeiten, vorschlagen. Dies verhindert, dass trotz einer offensichtlichen Ablehnung des Parkvorschlages dieser oder Parkplätze mit ähnlichen Eigenschaften erneut oder gar mehrfach vorgeschlagen werden und wiederholt abgelehnt werden müssen. Alternativ kann der abgelehnte Parkvorschlag vollständig aus dem System entfernt oder beispielsweise als ungeeignet deklariert werden. Durch ein Aussortieren ungeeigneter Parkmöglichkeiten kann eine Verbesserung der Algorithmen zur Erkennung verfügbarer Parkplätze vorgenommen werden. Zudem ergeben sich hieraus Möglichkeiten zur Personalisierung durch zusätzliche lernbare Attribute und durch die Erfassung von Nutzerpräferenzen.

Nach einer weiteren Ausführungsform wird für abgelehnte Parkplatzvorschläge ein temporärer oder dauerhafter Ausschluss registriert. Temporäre Abbruchgründe können derzeitige Verschmutzungen, zeitweilige Blockaden und Größenlimitierung durch andere derzeit parkende Fahrzeuge sein. Ein vollständiges Entfernen der Parkmöglichkeit aus dem System ist daher nicht nötig, da die Einschränkung höchstwahrscheinlich das Parken des Fahrzeugs nur vorübergehend ausschließt. Sobald ein Freiwerden des Parkplatzes durch das Fahrzeug selbst oder andere Fahrzeuge, die mit der fahrzeugexternen Servereinheit verbunden sind, festgestellt wird, kann der Parkplatz wieder als nutzbar eingestuft werden.

Im Folgenden werden anhand von stark vereinfachten schematischen Darstellungen bevorzugte Ausführungsbeispiele der Erfindung näher erläutert. Hierbei zeigen
Fig. 1 ein schematisches Fahrzeugsystem gemäß einer erfindungsgemäßen Ausführungsform und
Fig. 2 ein schematisches Ablaufdiagramm zum Veranschaulichen eines erfindungsgemäßen Verfahrens gemäß einer Ausführungsform.

In den Figuren weisen dieselben konstruktiven Elemente jeweils dieselben Bezugsziffern auf.

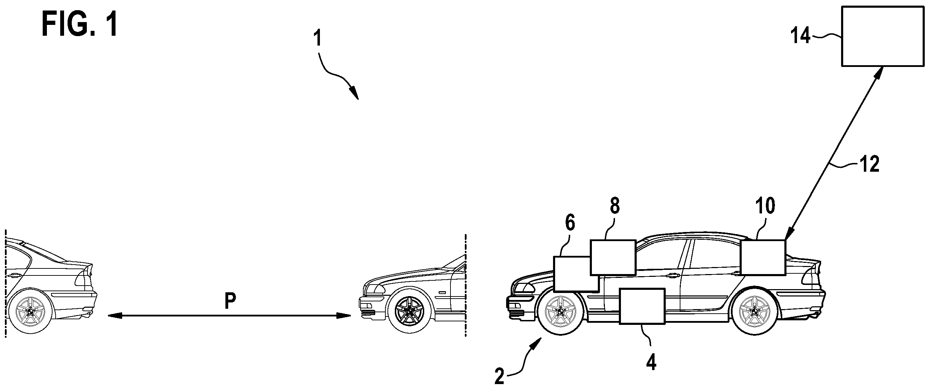

In der Figur 1 ist ein Fahrzeugsystem 1 gemäß einer erfindungsgemäßen Ausführungsform dargestellt. Das Fahrzeugsystem 1 weist mindestens ein Fahrzeug 2 auf, welches eine fahrzeuginterne Steuereinheit 4 aufweist.

Die Steuereinheit 4 dient zum Auswerten von einer Fahrzeugsensorik 6 und zum Betreiben eines Infotainmentsystems 8. Die Fahrzeugsensorik 6 kann beispielsweise Videosensoren, Radarsensoren, Ultraschallsensoren, LIDAR-Sensoren, Odometriesensoren und/oder Ortungssensoren aufweisen.

Des Weiteren weist das mindestens eine Fahrzeug 2 eine Kommunikationseinheit 10 auf, mittels welcher die Steuereinheit 4 eine drahtlose Kommunikationsverbindung 12 zu einer externen Servereinheit 14 herstellen kann.

Ein Parkassistenzsystem kann über das Infotainmentsystem 8 den Fahrer des Fahrzeugs 2 bei einem Finden eines Parkplatzes P unterstützen. Das Parkassistenzsystem kann dabei über die Steuereinheit 4 oder über die externe Servereinheit 14 bereitgestellt werden. Insbesondere kann der Fahrer bildgestützt oder sprachbasiert unterstützt werden.

Die externe Servereinheit 14 oder die Steuereinheit 4 sind dazu ausgerichtet über maschinelles Lernen die Eingaben und das Verhalten des Fahrers zu analysieren und somit die Parkassistenz zu optimieren.

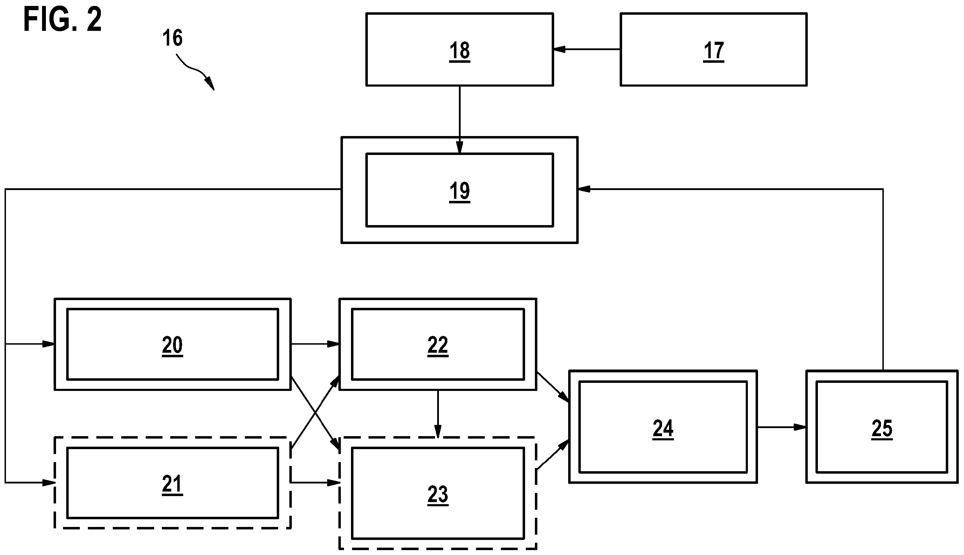

Die Figur 2 zeigt ein schematisches Ablaufdiagramm zum Veranschaulichen eines erfindungsgemäßen Verfahrens 16 gemäß einer Ausführungsform. Das Verfahren 16 dient zur Optimierung von Parkvorschlägen mindestens eines Fahrassistenzsystems für das mindestens eine Fahrzeug 2.

In einem Schritt 17 wird mindestens eine Route zu einem Zielort ermittelt. Es werden potentielle Parkmöglichkeiten P für das mindestens eine Fahrzeug 2 entlang der zuvor ermittelten Route festgestellt 18. Dies kann durch die fahrzeuginterne Steuereinheit 4 oder durch die fahrzeugexterne Servereinheit 14 erfolgen.

Die ermittelten Parkmöglichkeiten werden dem Fahrer empfohlen 19. Anschließend wird festgestellt, ob der Parkvorschlag vom Fahrer basierend auf einer Auswahl von Parkvorschlägen angenommen oder abgelehnt wird. Dies geschieht vorzugsweise automatisiert durch ein Auswerten des Verhaltens des Fahrers durch die Steuereinheit 4 oder durch die Servereinheit 14.

Beispielsweise kann ein nicht erfolgter Parkvorgang automatisch detektiert werden 20, indem ein vorgeschlagener Parkplatz P vom Fahrer nicht angefahren wurde.

Alternativ kann durch den Fahrer ein manueller Abbruch erfolgen oder ein Vorschlag für einen Parkplatz P manuell abgelehnt werden 21.

Für den Fall, dass der Parkvorschlag abgelehnt wird 20, 21, werden Abbruchinformationen gesammelt 22, 23. Die Abbruchinformationen können insbesondere automatisiert durch die Steuereinheit 4 oder durch die Servereinheit 14 gesammelt werden 22. Hierfür können Daten der Fahrzeugsensorik 6 und ein Verhalten des Fahrers analysiert werden. Alternativ kann der Fahrer über das Infotainmentsystem 8 nach einem Abbruchgrund bzw. Ablehnungsgrund befragt werden 23. Die Schritte 22 und 23 können hierbei auch parallel oder nacheinander durchgeführt werden.

Die Abbruchinformationen werden anschließend analysiert und eine Abbruchphase klassifiziert 24. In einem weiteren Schritt 25 werden die Abbruchinformationen bzw. das Resultat der Analyse dazu eingesetzt weitere Parkvorschläge an die Vorlieben und Präferenzen des Fahrers anzupassen und somit optimierte Parkvorschläge zu generieren. Die Analyse 24 und die Verwertung der Analyse 25 können insbesondere durch maschinelles Lernen implementiert werden und somit die Vorschläge verbessern

## Patentansprüche

1. Verfahren (16) zur Optimierung von Parkvorschlägen mindestens eines Fahrassistenzsystems für mindestens ein Fahrzeug (2), aufweisend die Schritte:
- Ermitteln mindestens einer Route zu einem Zielort (17),
- Ermitteln von potentiellen Parkmöglichkeiten (P) für das mindestens ein Fahrzeug (2) entlang der zuvor ermittelten Route (18, 19),
- Feststellen einer Annahme eines Parkvorschlages (P) aus einer Auswahl von Parkvorschlägen oder einer Ablehnung eines Parkvorschlages (20, 21),
wobei bei einer festgestellten Ablehnung des Parkvorschlages die folgenden Schritte durchgeführt werden:
- Ermitteln von Abbruchinformationen (22, 23),
- Analyse und Klassifizierung einer Abbruchphase und eines Abbruchgrundes (24) und
- Nutzung und Berücksichtigung von Analyseergebnissen für eine Auswahl an zukünftigen Parkvorschlägen (25).

2. Verfahren nach Anspruch 1, wobei die Annahme eines Parkvorschlages anhand von Annahmeindikatoren und die Ablehnung eines Parkvorschlags anhand von Ablehnungsindikatoren identifiziert werden.

3. Verfahren nach Anspruch 1 oder 2, wobei für die Analyse und Klassifizierung (24) einer Abbruchphase und eines Abbruchgrundes Daten von Videosensoren, Ultraschallsensoren, Radarsensoren, LIDAR-Sensoren, Odometriesensoren und/oder von Ortungssensoren verwendet werden.

4. Verfahren nach einem der Ansprüche 1 bis 3, wobei das Verfahren (16) basierend auf maschinellen Lernverfahren durchgeführt wird.

5. Verfahren nach einem der Ansprüche 1 bis 4, wobei die Annahme oder die Ablehnung eines Parkvorschlages durch ein Parkassistenzsystem oder einen Fahrer durchgeführt wird.

6. Verfahren nach einem der Ansprüche 1 bis 5, wobei eine Ablehnung eines Parkvorschlages durch den Fahrer über ein Display, ein Infotainmentsystem (8) und/oder sprachebasiert über digitalen Assistenten durchgeführt wird (21).

7. Verfahren nach einem der Ansprüche 1 bis 6, wobei die Analyse und Klassifizierung einer Abbruchphase und eines Abbruchgrundes (24) auf einer fahrzeugexternen Servereinheit (14) oder einem fahrzeuginternen Steuergerät (4) durchgeführt werden.

8. Verfahren nach einem der Ansprüche 1 bis 7, wobei durch das Verfahren (16) für ähnliche Fahrzeuge (2) und/oder ähnliche Fahrerpräferenzen ähnliche Parkplatzvorschläge erzeugt werden.

9. Verfahren nach einem der Ansprüche 1 bis 8, wobei eine Nutzung von Daten zur Analyse und Klassifizierung einer Abbruchphase und eines Abbruchgrundes (24) von anderen Fahrzeugen (2) für Parkplatzvorschläge auf der fahrzeugexternen Servereinheit (14) bereitgestellt werden

10. Verfahren nach einem der Ansprüche 1 bis 9, wobei abgelehnte Parkplätze (P) für das Fahrzeug (2) und/oder den Fahrer künftig ausgeschlossen oder geringfügiger berücksichtigt werden.

11. Verfahren nach einem der Ansprüche 1 bis 10, wobei für abgelehnte Parkplatzvorschläge ein temporärer oder dauerhafter Ausschluss registriert wird.

12. Fahrzeugsystem (1) zum Ausführen eines Verfahrens (16) nach einem der vorhergehenden Ansprüche.

## Claims

1. Method (16) for optimizing parking suggestions of at least one driver assistance system for at least one vehicle (2), including the steps of:
- ascertaining at least one route to a destination (17),
- ascertaining potential parking options (P) for the at least one vehicle (2) along the previously ascertained route (18, 19),
- determining an acceptance of a parking suggestion (P) from a selection of parking suggestions or a rejection of a parking suggestion (20, 21),
wherein the following steps are carried out if a rejection of the parking suggestion is determined:
- ascertaining stop information (22, 23),
- analysing and classifying a termination phase and a termination reason (24), and
- using and taking into account analysis results for a selection of future parking suggestions (25).

2. Method according to Claim 1, wherein the acceptance of a parking suggestion is identified on the basis of acceptance indicators and the rejection of a parking suggestion is identified on the basis of rejection indicators.

3. Method according to Claim 1 or 2, wherein data from video sensors, ultrasonic sensors, radar sensors, lidar sensors, or odometry sensors and/or localization sensors are used to analyse and classify (24) a termination phase and a termination reason.

4. Method according to any of Claims 1 to 3, wherein the method (16) is carried out based on machine learning methods.

5. Method according to any of Claims 1 to 4, wherein the acceptance or the rejection of a parking suggestion is effected by a parking assistance system or a driver.

6. Method according to any of Claims 1 to 5, wherein a rejection of a parking suggestion by the driver is carried out (21) via a display, an infotainment system (8) and/or in a voice-based manner via digital assistance.

7. Method according to any of Claims 1 to 6, wherein the analysis and classification of a termination phase and of a termination reason (24) are carried out on a server unit (14) outside the vehicle or on a controller (4) inside the vehicle.

8. Method according to any of Claims 1 to 7, wherein similar parking space suggestions are generated by the method (16) for similar vehicles (2) and/or similar driver preferences.

9. Method according to any of Claims 1 to 8, wherein the use of data for analysing and classifying a termination phase and a termination reason (24) from other vehicles (2) for parking space suggestions is provided on the server unit (14) outside the vehicle.

10. Method according to any of Claims 1 to 9, wherein rejected parking spaces (P) will in future be excluded for the vehicle (2) and/or the driver or given less consideration.

11. Method according to any of Claims 1 to 10, wherein a temporary or permanent exclusion is registered for rejected parking space suggestions.

12. Vehicle system (1) for carrying out a method (16) according to any of the preceding claims.

## Revendications

1. Procédé (16) d'optimisation de propositions de stationnement d'au moins un système d'aide à la conduite pour au moins un véhicule (2), ledit procédé comportant les étapes suivantes :
- déterminer au moins un itinéraire vers un emplacement cible (17),
- déterminer des options de stationnement potentielles (P) pour l'au moins un véhicule (2) le long de l'itinéraire (18, 19) préalablement déterminé,
- constater une acceptation d'une proposition de stationnement (P) à partir d'une sélection de propositions de stationnement ou un rejet d'une proposition de stationnement (20, 21),
les étapes suivantes étant réalisées en cas de rejet constaté de la proposition de stationnement :
- déterminer des informations d'annulation (22, 23),
- analyser et classifier une phase d'annulation et un motif d'annulation (24) et
- utiliser et prendre en compte des résultats d'analyse pour sélectionner de futures propositions de stationnement (25).

2. Procédé selon la revendication 1, l'acceptation d'une proposition de stationnement étant identifiée à l'aide d'indicateurs d'acceptation et le rejet d'une proposition de stationnement étant identifié à l'aide d'indicateurs de rejet.

3. Procédé selon la revendication 1 ou 2, des données provenant de capteurs vidéo, de capteurs à ultrasons, de capteurs radar, de capteurs LIDAR, de capteurs d'odométrie et/ou de capteurs de localisation étant utilisées pour l'analyse et la classification (24) d'une phase d'annulation et d'un motif d'annulation.

4. Procédé selon l'une des revendications 1 à 3, le procédé (16) étant réalisé sur la base de procédés d'apprentissage automatique.

5. Procédé selon l'une des revendications 1 à 4, l'acceptation ou le rejet d'une proposition de stationnement étant réalisé(e) par un système d'aide au stationnement ou un conducteur.

6. Procédé selon l'une des revendications 1 à 5, un rejet d'une proposition de stationnement par le conducteur étant réalisé par le biais d'un moyen d'affichage, d'un système d'info-divertissement (8) et/ou vocalement par le biais d'assistants numériques (21) .

7. Procédé selon l'une des revendications 1 à 6, l'analyse et la classification d'une phase d'annulation et d'un motif d'annulation (24) étant effectuées sur une unité formant serveur (14) externe au véhicule ou un organe de commande (4) interne au véhicule.

8. Procédé selon l'une des revendications 1 à 7, des propositions de places de stationnement similaires étant générées par le procédé (16) pour des véhicules similaires (2) et/ou des préférences de conducteur similaires.

9. Procédé selon l'une des revendications 1 à 8, une utilisation de données pour l'analyse et la classification d'une phase d'annulation et d'un motif d'annulation (24) étant fournie par d'autres véhicules (2) pour des propositions de stationnement sur l'unité formant serveur (14) externe au véhicule.

10. Procédé selon l'une des revendications 1 à 9, dans lequel des places de stationnement rejetées (P) pour le véhicule (2) et/ou le conducteur sont exclues à l'avenir ou prises en compte avec moins d'importance.

11. Procédé selon l'une des revendications 1 à 10, une exclusion temporaire ou permanente étant enregistrée pour les propositions de stationnement rejetées.

12. Système de véhicule (1) destiné à mettre en œuvre un procédé (16) selon l'une des revendications précédentes.
